# EUROPÄISCHE PATENTSCHRIFT

(11) **EP 1 586 370 B1**
(45) Veröffentlichungstag und Bekanntmachung des Hinweises auf die Patenterteilung: **06.05.2015**
(21) Anmeldenummer: 05004470.0
(22) Anmeldetag: 01.03.2005
(51) Int. Cl.: B01J 12/00, B01J 8/06, F28F 9/02, F28F 9/26, F28D 7/16, F28D 7/00

(54) **Reaktoranordnung zur Durchführung katalytischer Gasphasenreaktionen**
Reactor arrangement for carrying out catalytic gas reactions
Ensemble réacteur destiné à la mise en oeuvre de réactions catalytiques en phase gazeuse

(30) Priorität: 15.04.2004 DE 102004018267
(43) Veröffentlichungstag der Anmeldung: 19.10.2005
(73) Patentinhaber: MAN Diesel & Turbo SE, 86153 Augsburg (DE)
(72) Erfinder: Gütlhuber, Friedrich, 85579 Neubiberg (DE); Lehr, Manfred, 94469 Deggendorf (DE)
(74) Vertreter: Paustian, Othmar

(56) Entgegenhaltungen:
- WO-A-02/063230
- WO-A1-03/011449
- WO-A1-03/072237
- DE-U1- 20 301 514

## Beschreibung

Die Erfindung bezieht sich auf eine Reaktoranordnung zur Durchführung katalytischer Gasphasenreaktionen nach dem Oberbegriff des Anspruchs 1. Die Erfindung bezieht sich auch auf die Verwendung einer solchen Reaktoranordnung zur Durchführung unterschiedlichster katalytischer Gasphasenreaktionen.

Bei vielen Gasphasenreaktionen ist es wichtig, daß nach Beendigung der gewünschten Reaktion weitere Reaktionen schnell unterbunden werden, damit unerwünschte Nebenreaktionen nicht stattfinden. Eine Möglichkeit hierfür ist ein schnelles Abkühlen des Reaktionsgases in einem Nachkühler mittels Kühlrohren. Die Kühlrohre enthalten entweder einen Leerraum oder eine inerte Füllung, die aus geordneten Packungen, Spiralen oder beliebigen Füllkörpern bestehen kann.

Es ist bekannt, z. B. aus US 3,147,084 oder DE 101 44 857 A1, die Reaktionsrohre durch eine Trennplatte hindurch als Kühlrohre in eine Nachkühlzone bzw. in einen Nachkühler hinein zu verlängern. In einer in US 3,147,084 u.a. vorgeschlagenen Ausführungsform ist der Nachkühler als separater Apparat ausgeführt und an den Reaktor angeflanscht. Die Rohrenden der Reaktionsrohre und der Kühlrohre liegen einander direkt und mit geringem Abstand gegenüber, wobei die Rohrenden auch konisch verjüngt bzw. erweitert und ineinander geschoben sein können. Wie bei der Ausführungsform mit den kontinuierlich in den Nachkühler hinein verlängerten Reaktionsrohren sind auch bei dieser Ausführungsform die Anzahl der Reaktionsrohre und die der Kühlrohre gleich. Da die Anzahl der Kühlrohre der Anzahl der Reaktionsrohre entspricht, sind die Möglichkeiten des Nachkühlerdesigns eingeschränkt. So ist beispielsweise die Anpassung an unterschiedliche Wärmeträger, wie z. B. an drucklosen Betrieb auf der Mantelseite bei flüssigem Salz oder an Druckbetrieb auf der Mantelseite bei Verdampfungskühlung mit Wasser, nicht in optimaler Weise möglich. Insbesondere können Einrichtungen für die Strömungsführung des Wärmeträgers, die den Wirkungsgrad der Reaktoranordnung wesentlich beeinflußt, zwischen den Kühlrohren nicht immer in der jeweils geeigneten Weise angeordnet oder ausgebildet werden. In den Kühlrohren kommt es erfahrungsgemäß verstärkt zu Ablagerungen. Zwar sind die Kühlrohre in der angeflanschten Ausführungsform des Nachkühlers leicht zugänglich, jedoch ist die Reinigung der Kühlrohre an sich zeit- und arbeitsaufwendig.

Aus DE 203 01 514 U1 ist ein Mehrzonen-Mantelrohrreaktor zur Durchführung exothermer Gasphasenreaktionen bekannt, bei dem eine Kühlzone an die Reaktionszone angeflanscht sein kann. Die Zahl, der Durchmesser und die Teilung der Kühlrohre können von denen der Reaktionsrohre abweichen. Auch die Manteldurchmesser können unterschiedlich sein, und häufig enthält ein solcher Nachkühler weniger Rohre als der eigentliche Reaktor.

Eine Reaktoranordnung der eingangs genannten Art ist in der WO 02/063230 A1 beschrieben. Bei der dort vorgeschlagenen Reaktoranordnung ist die Anzahl der Kühlrohre geringer als die Anzahl der Reaktionsrohre und der Manteldurchmesser des Nachkühlers kleiner als der Manteldurchmesser des Reaktors. Der Nachkühler ist mit dem Mantelrohrreaktor einstückig verbunden. Nachteilig bei dieser vorbekannten Reaktoranordnung ist, daß die Strömungswege von den Reaktionsrohren zu den Kühlrohren von der Mitte des Reaktions- bzw. des Kühlrohrbündels zu deren Rändern hin größer werden und daher am Rand relativ lang und insgesamt deutlich unterschiedlich sind. Die längeren Strömungswege von den radial außenliegenden Reaktionsrohren zu den radial außenliegenden Kühlrohren verlangsamen die Abkühlung des Reaktionsgasgemisches. Darüber hinaus führt die über den Rohrbündelquerschnitt unterschiedliche Reaktionsgasabkühlung zu einer ungleichmäßigen Belastung der Kühlrohre, was wiederum zu mehr Ablagerungen in den Kühlrohren führt. Durch die integrale Ausbildung des Nachkühlers, der durch eine Schweißverbindung fest mit dem Reaktor verbunden ist, ist diese Reaktoranordnung wartungsunfreundlich, was in Verbindung mit der Tendenz zur Erzeugung von mehr Ablagerungen einen sehr hohen Reinigungsaufwand mit sich bringt.

Demgegenüber liegt die Aufgabe der vorliegenden Erfindung darin, eine gattungsgemäße Reaktoranordnung so zu verbessern, daß ein für die jeweiligen Anforderungen optimales Nachkühlerdesign weniger Beschränkungen unterworfen ist und dabei die Reinigungskosten verringert werden.

Erfindungsgemäß wird diese Aufgabe bei einer Reaktoranordnung der eingangs genannten Art durch die kennzeichnenden Merkmale des Anspruchs 1 gelöst.

Der Ausdruck "im wesentlichen" soll besagen, daß in den berohrten Querschnittsflächen vereinzelt lokale Störstellen und an den Rändern der berohrten Querschnittsflächen geringe gegenseitige Überstände vorhanden sein können, deren Auswirkungen zwar vernachlässigbar sind, deren Vorhandensein jedoch technisch unvermeidbar ist.

So müssen in den berohrten Querschnittsflächen einzelne Rohre ausgelassen werden, um dort z. B. Anker zum Halten der Umlenkscheiben anzuordnen oder Strömungsleitbleche hindurchzuführen. Überstände an den Rändern der berohrten Querschnittsflächen sind unvermeidbar, da Kühlrohre und Reaktionsrohre nicht oder nur in geringer Anzahl miteinander fluchten und daher die weitaus überwiegende Anzahl der auf den Rändern liegenden Kühlrohre und Reaktionsrohre radial zueinander versetzt ist. Die Größe des Versatzes bzw. Überstandes hängt von den jeweiligen Mittelpunktsabständen benachbarter Reaktionsrohre und Kühlrohre ab und ist nicht größer als der Mittelpunktsabstand T₂ benachbarter Kühlrohre. Der optimale Wert wird weiter unten erläutert.

Die Unteransprüche geben vorteilhafte Ausgestaltungsmöglichkeiten an.

Die Nebenansprüche geben Verwendungsmöglichkeiten an.

Durch die erfindungsgemäßen Maßnahmen wird das Design des Nachkühlers weitgehend unabhängig von dem des Reaktors und infolge der so eröffneten konstruktiven Gestaltungsmöglichkeiten in jedem Fall eine schnelle und gleichmäßige Abkühlung des Reaktionsgases erzielt, wobei auch noch die Reinigungskosten gesenkt werden. Da der Überstand der jeweiligen berohrten Querschnittsflächen zueinander höchstens die Rohrteilung T₂ der Kühlrohre beträgt, sind die berohrten Querschnittsflächen von Nachkühler und Mantelrohrreaktor im wesentlichen deckungsgleich bei verringerter Kühlrohranzahl gegenüber der Reaktionsrohranzahl, können die Rohranordnung, die Rohrteilung, die Rohrabmessungen und die Wärmeträgermenge in weiten Bereichen variiert werden und mit Art und Verlauf von Einrichtungen für die Stromführung des Wärmeträgers, die in den Gassen zwischen den Kühlrohren angeordnet sind, im Hinblick auf die jeweilige Verwendung der Reaktoranordnung optimal abgestimmt werden. In paarweise einander gegenüberliegenden und paarweise gleich großen Teilflächen der berohrten Querschnittsflächen von Reaktor und Nachkühler sollen die auf jedes Teilflächen-Paar entfallenden Durchströmungsquerschnitte der Kühlrohre zu den Durchströmungsquerschnitten der Reaktionsrohre jeweils im in etwa gleichen Größenverhältnis stehen. Hierdurch werden die Strömungswege des Reaktionsgases vom Reaktionsrohr zum nächstgelegenen Kühlrohr relativ kurz und im wesentlichen gleich lang, so daß das Reaktionsgas über den Querschnitt des Reaktors bzw. Nachkühlers schnell und gleichmäßig abkühlt. Die im wesentlichen gleich langen Strömungswege bewirken eine im wesentlichen gleichmäßige Durchströmung bzw. Belastung aller Kühlrohre über die berohrte Querschnittsfläche des Nachkühlers. Dadurch wird die Gefahr von unerwünschten Nachreaktionen deutlich verringert, was die Ablagerungen in den Kühlrohren beträchtlich reduziert und damit längere Reinigungsintervalle ermöglicht. Somit verringert sich der Anteil der Reinigungskosten an den Betriebskosten.

Für eine schnelle Abkühlung des Reaktionsgases ist in erster Linie ein guter Wärmeübergang sowohl auf der Gas- als auch auf der Wärmeträgerseite notwendig. Dieser Wärmeübergang wiederum ist abhängig von der Art der Strömungsführung und im wesentlichen von der Höhe der Strömungsgeschwindigkeit des Reaktionsgases einerseits und des Wärmeträgers andererseits. Hinsichtlich der Strömungsgeschwindigkeit des Wärmeträgers ist zu berücksichtigen, daß mit steigender Strömungsgeschwindigkeit auch der Druckverlust steigt. Die erfindungsgemäßen Merkmale führen zu einer Optimierung dieser gegenläufigen Effeke, wobei das Reaktionsgas verzögerungsfrei und schnell abgekühlt wird.

Die Erfindung wird nachfolgend anhand der Zeichnungen beispielshalber noch näher erläutert. Es zeigen:
- Figur 1: in schematischer Darstellung einen Längsschnitt durch eine erste Ausführungsform in einer erfindungsgemäßen Reaktoranordnung;
- Figur 2a: einen Teil-Längsschnitt durch das Reaktionsrohrbündel und das Kühlrohrbündel einer zweiten Ausführungsform einer erfindungsgemäßen Reaktoranordnung, längs Linie IIa-IIa in Figur 2b, wobei der Abstand der Reaktionsrohre aus Gründen der Übersichtlichkeit vergrößert dargestellt ist;
- Figur 2b: einen Teil-Querschnitt längs Linie IIb-IIb in Figur 2a;
- Figur 3a: einen Längsschnitt durch einen Nachkühler einer dritten Ausführungsform einer erfindungsgemäßen Reaktoranordnung, längs Linie IIIa-IIIa in Figur 3b;
- Figur 3b: einen Querschnitt längs Linie IIIb-IIIb in Figur 3a;
- Figur 4a: einen Längsschnitt durch einen Nachkühler einer vierten Ausführungsform einer erfindungsgemäßen Reaktoranordnung, längs Linie IVa-IVa in Figur 4b;
- Figur 4b: einen Querschnitt längs Linie IVb-IVb in Figur 4a;
- Figur 5a: einen Längsschnitt durch einen Nachkühler einer fünften Ausführungsform einer erfindungsgemäßen Reaktoranordnung, längs Linie Va-Va in Figur 5b;
- Figur 5b: einen Querschnitt längs Linie Vb-Vb in Figur 5a;
- Figur 6a: einen Längsschnitt durch einen Nachkühler einer sechsten Ausführungsform einer erfindungsgemäßen Reaktoranordnung, längs Linie VIa-VIa in Figur 6b oder Figur 6c;
- Figur 6b: eine Ansicht des Nachkühlers aus Figur 6a, längs Linie VIb,c-VIb,c;
- Figur 6c: eine Ansicht des Nachkühlers aus Figur 6a, längs Linie VIb,c-VIb,c, mit einem alternativen Verlauf eines Strömungsleitbleches für den Wärmeträger;
- Figur 7a: einen Längsschnitt durch einen Nachkühler einer siebten Ausführungsform einer erfindungsgemäßen Reaktoranordnung, längs Linie VIIa-VIIa in Figur 7b;
- Figur 7b: einen Querschnitt längs Linie VIIb-VIIb in Figur 7a;
- Figur 8: einen Längsschnitt durch einen Nachkühler einer achten Ausführungsform einer erfindungsgemäßen Reaktoranordnung;
- Figur 9a: einen Querschnitt durch einen Nachkühler einer neunten Ausführungsform einer erfindungsgemäßen Reaktoranordnung.
- Figur 9b: ein Detail aus Figur 9a in vergrößertem Maßstab;
- Figur 10a: einen Querschnitt durch einen Nachkühler einer zehnten Ausführungsform einer erfindungsgemäßen Reaktoranordnung;
- Figur 10b: ein Detail aus Figur 10a in vergrößertem Maßstab;
- Figur 11a: in schematischer Darstellung eine Teilansicht einer erfindungsgemäßen Reaktoranordnung, wobei der Nachkühler mit dem Mantelrohrreaktor lösbar verbunden ist und eine Vorrichtung zum Absenken und Anheben des Nachkühlers vorgesehen ist; und
- Figur 11b: eine der Figur 11a ähnliche Ansicht, mit einer zweiten Ausführungsform einer Vorrichtung zum Absenken und Anheben des Nachkühlers.

Die dargestellten Ausführungsbeispiele erfindungsgemäßer Reaktoranordnungen 1 weisen einen Mantelrohrreaktor 2 und einen diesem direkt nachgeschalteten Nachkühler 3 auf. Über eine Gaseintrittshaube 4 wird das Reaktionsgas 5 in den Mantelrohrreaktor 2 eingeleitet. Nach Durchströmung des Mantelrohrreaktors 2 und des Nachkühlers 3 wird das Reaktionsgas 5 mittels einer Gasaustrittshaube 6 aus der Reaktoranordnung 1 abgeleitet.

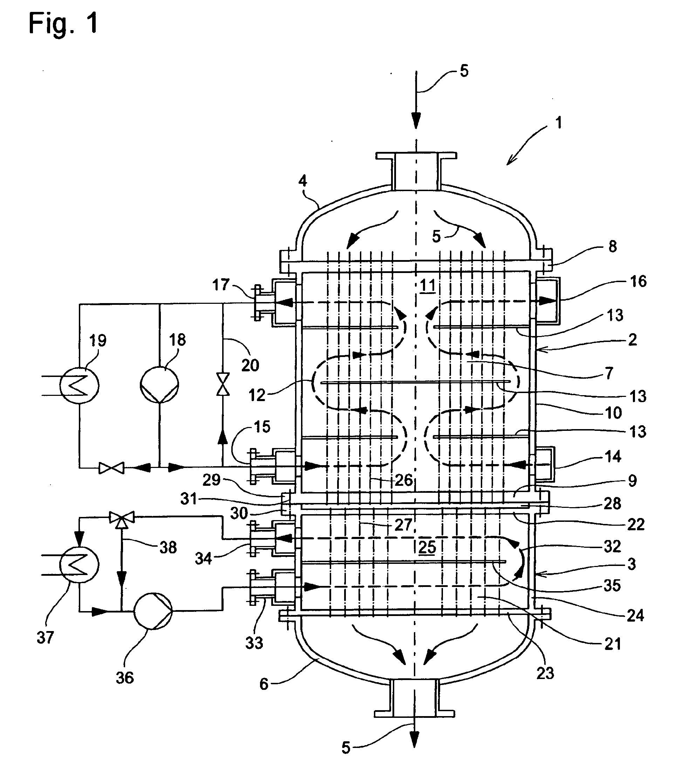

Der Mantelrohrreaktor 2 (Figur 1) enthält eine Vielzahl bzw. ein Bündel katalysatorgefüllter Reaktionsrohre 7, die sich zwischen einem oberen Rohrboden 8 und einem unteren Rohrboden 9 vertikal erstrecken und von einem zylindrischen Mantel 10 umschlossen sind. An beiden Enden der Reaktionsrohre 7 sind deren Außenseiten mit dem jeweiligen Rohrboden 8, 9 gasdicht verschweißt. Im Zentrum des Reaktionsrohrbündels 7 ist ein rohrfreier Bereich 11 ausgebildet.

Die Reaktionsrohre werden von einem Wärmeträger 12 umspült, der auf unterschiedlichen Strömungswegen durch das Reaktionsrohrbündel 7 geführt werden kann. Der in Figur 1 dargestellte Mantelrohrreaktor 2 ist, wie die meisten Mantelrohrreaktoren, als Radialstromreaktor ausgeführt. Der Mantelrohrreaktor 2 ist in der Strömungsführung des Wärmeträgers jedoch nicht eingeschränkt.

Quer zur Längsrichtung der Reaktionsrohre erstrecken sich im in Figur 1 dargestellten Ausführungsbeispiel abwechselnd ring- und scheibenförmige Umlenkbleche 13, um den Wärmeträgerstrom mäanderförmig in jeweils radialer Richtung von außen nach innen und umgekehrt durch das Reaktionsrohrbündel 7 zu führen. Im unteren Endbereich des Mantels 10 ist auf dessen Außenseite eine Ringleitung 14 mit einem Eintrittsstutzen 15 angeordnet, durch die bzw. den hindurch ein Wärmeträger 12 - z. B. flüssiges Salz - in den Mantelrohrreaktor 2 eingeleitet wird. Im oberen Endbereich des Mantels 10 ist auf dessen Außenseite eine zweite Ringleitung 16 mit einem Austrittsstutzen 17 ausgebildet, durch die bzw. den hindurch der Wärmeträger 12 nach Durchströmung des Reaktionsrohrbündels 7 aus dem Mantelrohrreaktor 2 abgeleitet wird. Der Wärmeträger 12 wird mittels einer Umwälzeinrichtung 18 mit der gewünschten Umwälzmenge bzw. Strömungsgeschwindigkeit und mittels einer Kühl- bzw. Heizeinrichtung 19 mit der gewünschten Temperatur in dem Wärmeträgerkreislauf umgewälzt. Des weiteren ist eine Bypass-Leitung 20 vorgesehen.

Der Nachkühler 3 weist eine Vielzahl bzw. ein Bündel Kühlrohre 21 auf, deren Anzahl geringer ist als die Anzahl der Reaktionsrohre 7. Die Kühlrohre 21 erstrecken sich von einem oberen Nachkühler-Rohrboden 22 vertikal zu einem unteren Nachkühler-Rohrboden 23 und sind von einem zylindrischen Nachkühler-Mantel 24 umschlossen. An beiden Enden der Kühlrohre 21 sind deren Außenseiten mit dem jeweiligen Nachkühler-Rohrboden 22, 23 gasdicht verschweißt.

Die Kühlrohre 21 sind entweder leer oder weisen katalysatorfreie turbulenzerzeugende Einbauten auf, wie z. B. geordnete Packungen, Spiralen, Wendeln, profilierte Stangen oder Schüttungen von Füllkörpern beliebiger Art. Durch solche Einbauten in den Kühlrohren 21 kann der Wärmeübergangskoeffizient an der Innenwand deutlich vergrößert werden. Dadurch wiederum reduziert sich die erforderliche Wärmeübertragungsfläche, d. h. die erforderliche Kühlrohrlänge. Ein kürzerer Nachkühler 3 spart Investitionskosten und Bauraum. Darüber hinaus wird die Verweilzeit des Reaktionsgases 5 im Nachkühler 3 reduziert, d. h. das Reaktionsgas 5 schneller abgekühlt, was die Bildung von unerwünschten Ablagerungen erschwert.

Trotz aller Maßnahmen kann jedoch nicht ausgeschlossen werden, daß sich in einzelnen Kühlrohren 21 Ablagerungen bilden, die die Einbauten verkleben können. Um in solchen Fällen das Entfernen der Einbauten aus den Kühlrohren 21 zu vereinfachen, sind die Einbauten vorzugsweise aus einem spröden Werkstoff, wie z. B. Keramik oder Glas, gebildet. Die Einbauten können dann leichter in den Kühlrohren 21 zerstört und aus diesen in Teilen entfernt werden.

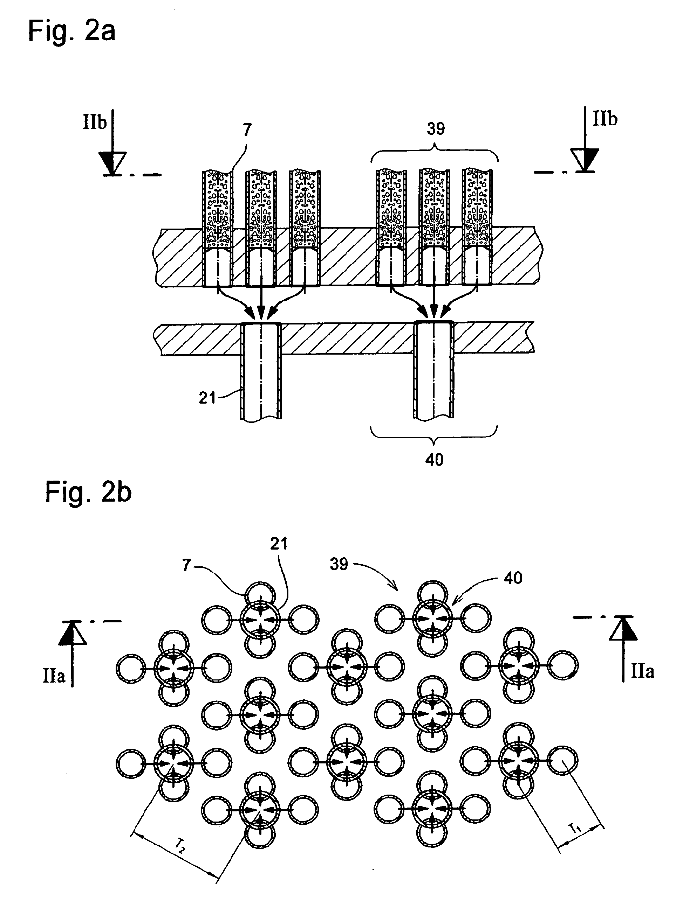

Das Kühlrohrbündel 21 weist einen mittigen inneren rohrfreien Bereich 25 auf, dessen Querschnittsabmessungen in etwa denen des rohrfreien Bereichs 11 des Mantelrohrreaktors 2 entsprechen. Der Außendurchmesser des Kühlrohrbündels 21 entspricht im wesentlichen dem Außendurchmesser des Reaktionsrohrbündels 7. Daher sind die von dem Reaktionsrohrbündel 7 senkrecht zur Längsachse der Reaktionsrohre belegte berohrte Querschnittsfläche 26 und die von dem Kühlrohrbündel 21 senkrecht zur Längsachse der Kühlrohre belegte berohrte Querschnittsfläche 27 im wesentlichen deckungsgleich, wobei jedoch die Anzahl der Kühlrohre geringer ist als die Anzahl der Reaktionsrohre und daher die radialen Randbereiche des Reaktionsrohrbündels 7 und des Kühlrohrbündels 21 einen radialen Versatz zueinander aufweisen. Der optimale radiale Versatz bzw. radiale Überstand der berohrten Querschnittsfläche 26 im Mantelrohrreaktor 2 über die berohrte Querschnittsfläche 27 im Nachkühler 3 beträgt (T₂ - T₁)/2, wobei T₁ die Rohrteilung der Reaktionsrohre 7 und T₂ die Rohrteilung der Kühlrohre 21 darstellt. Als Rohrteilung wird der kürzeste Mittelpunktsabstand zweier benachbarter Rohre bezeichnet (siehe Figur 2b).

Aufgrund der geringeren Kühlrohranzahl werden auch die Herstellungskosten verringert, da insgesamt eine geringere Rohrlänge, eine geringere Anzahl von Bohrungen und verminderte Arbeitszeiten für Montage, Einschweißung und Prüfungen erforderlich werden.

Zwischen dem unteren Rohrboden 9 des Mantelrohrreaktors 2 und dem oberen Rohrboden 22 des Nachkühlers 3 ist ein Gassammel- bzw. Gasübertrittsraum 28 angeordnet, in dem das Reaktionsgas 5 aus den Reaktionsrohren 7 austritt und in die Kühlrohre 21 eintritt.

Der untere Rohrboden 9 des Mantelrohrreaktors 2 und der obere Rohrboden 22 des Nachkühlers 3 sind jeweils radial nach außen über die Mäntel hinaus verlängert, um als Flansch 29, 30 zu dienen. Die Flansche sind miteinander verschraubt 31.

Das Kühlrohrbündel 21 wird in einem von dem Wärmeträgerkreislauf des Mantelrohrreaktors 2 unabhängigen Wärmeträgerkreislauf von einem Wärmeträger 32 quer durchströmt.

Durch einen vom Mantelrohrreaktor 2 unabhängigen Wärmeträgerkreislauf für den Nachkühler 3 läßt sich die Temperatur des Nachkühlers 3 flexibel einstellen.

Der Nachkühler 3 ist ebenso wie der Mantelrohrreaktor 2 in der Strömungsführung des Wärmeträgers 32 nicht eingeschränkt. Auch der Nachkühler 3 kann vom Wärmeträger 32 mit entsprechenden scheibenförmigen und ringförmigen Umlenkblechen radial durchströmt werden.

Ein besonderer Vorteil wird jedoch erreicht, wenn der Nachkühler 3 quer durchströmt wird, unabhängig davon ob bzw. auch wenn der Mantelrohrreaktor 2 - wie in Figur 1 dargestellt - radial durchströmt wird.

Während beim radial durchströmten Rohrbündel die Anströmung über den gesamten Umfang des Rohrbündels erfolgt, ist die Anströmfläche bei Querdurchströmung deutlich geringer. Dabei wird trotzdem das gesamte Rohrbündel durchströmt. Eine kleinere Anströmfläche bedeutet jedoch eine höhere Strömungsgeschwindigkeit und damit einhergehend einen verbesserten mantelseitigen Wärmeübergang.

Durch die Querströmung können die außenliegenden Ringleitungen ganz oder teilweise wegfallen. Statt dessen wird der Wärmeträger 32 durch innen im Ringraum zwischen Kühlrohrbündel 21 und Nachkühler-Mantel 24 liegende und gegebenenfalls in das Kühlrohrbündel 21 hineinragende Strömungsleit- und Strömungsverteileinrichtungen, die auch als Sammel- und/oder als Mischeinrichtungen ausgebildet sein können, auf das Kühlrohrbündel 21 verteilt.

Im unteren Endbereich des Nachkühler-Mantels 24 ist ein Eintrittsstutzen 33 und im oberen Endbereich ein Austrittsstutzen 34 für den Wärmeträger 32 vorgesehen. In vertikaler Richtung zwischen dem Eintritts- und dem Austrittsstutzen 33, 34 ist in halber Höhe des Nachkühlers 3 ein Umlenkblech 35 an der Seite des Nachkühler-Mantels 24 innen befestigt, an der auf der Außenseite der Eintritts- und der Austrittsstutzen 33, 34 befestigt sind. Das Umlenkblech 35 erstreckt sich horizontal durch das gesamte Kühlrohrbündel 21 hindurch und teilt es so in zwei Abschnitte, wodurch der Wärmeträger 32 vom Eintrittsstutzen 33 kommend den gesamten Querschnitt des Rohrbündels 21 im ersten Abschnitt durchströmt und nach seiner Umlenkung zum Austrittsstutzen 34 hin wiederum den gesamten Querschnitt des Kühlrohrbündels 21 im zweiten Abschnitt durchströmt. Eine zweite Umwälzeinrichtung 36 und eine zweite Kühl- bzw. Heizeinrichtung 37 fördern den Wärmeträger 32 mit der gewünschten Umwälzmenge und der gewünschten Temperatur durch den Nachkühler 3. Auch hier ist eine Bypass-Leitung 38 vorgesehen.

In dem in den Figuren 2a und 2b ausschnittsweise dargestellten Ausführungsbeispiel eines Reaktionsrohrbündels 7 und eines Kühlrohrbündels 21 sind jedem Kühlrohr vier Reaktionsrohre zugeordnet, so daß die Kühlrohranzahl ein Viertel der Reaktionsrohranzahl beträgt. Die Anordnung der Reaktionsrohre 7 und der Kühlrohre 21 kann den jeweiligen Erfordernissen entsprechend beliebig angepaßt werden. Das hier dargestellte Ausführungsbeispiel ist nur eines von vielen möglichen.

Die Kühlrohre 21 sind jeweils in etwa mittig unter einer rautenförmig angeordneten Reaktionsrohr-Vierergruppe 39 angeordnet, so daß der Strömungsweg von jedem dieser vier Reaktionsrohre 7 zum darunter angeordneten Kühlrohr 21 im wesentlichen gleich ist. Das Reaktionsrohrbündel 7 läßt sich auf diese Weise in eine Vielzahl nebeneinander angeordneter rautenförmiger Reaktionsrohr-Vierergruppen bzw. entsprechender Teilflächen 39 unterteilen, die jeweils einem unter ihm angeordneten Kühlrohr 21 zugeordnet sind, das in jeweiligen Teilflächen 40 liegt, in die die berohrte Querschnittsfläche 27 des Kühlrohrbündels 21 unterteilt werden kann. Die das Kühlrohr enthaltende Teilfläche 40 des Kühlrohrbündels 21 und die die Reaktionsrohr-Vierergruppe enthaltende Teilfläche 39 des Reaktionsrohrbündels 7 liegen einander jeweils paarweise gegenüber und sind paarweise gleich groß und gleich geformt. Die Teilflächen-Paare 39, 40 weisen jeweils denselben Durchströmungsquerschnitt bzw. lichten Querschnitt des Kühlrohrs 21 und ebenso denselben Durchströmungsquerschnitt bzw. lichten Querschnitt der Reaktionsrohre 7 und somit jeweils das gleiche Größenverhältnis von Durchströmungsquerschnitt der Kühlrohre 21 zum Durchströmungsquerschnitt der Reaktionsrohre 7 auf.

Der Innendurchmesser der Kühlrohre 21 ist größer als der Innendurchmesser der Reaktionsrohre 7. Im hier dargestellten Beispiel beträgt der Innendurchmesser der Kühlrohre 21 etwa das 1,33-fache des Innendurchmessers der Reaktionsrohre 7.

Der Durchströmungsquerschnitt der Kühlrohre 21 ist jedoch jeweils geringer als der Durchströmungsquerschnitt der zugeordneten vier Reaktionsrohre 7. Dadurch wird die Strömungsgeschwindigkeit des Reaktionsgases 5 in den Kühlrohren 21 erhöht und damit der gasseitige Wärmeübergang verbessert. Aufgrund der Verbesserung des gasseitigen Wärmeübergangs kommt es zu einer schnellen Abkühlung mit einer kleinen Verweilzeit.

Ein vergrößerter Kühlrohrdurchmesser führt auch zu einer besseren Reinigungsmöglichkeit der Kühlrohre 21, da der Zugang zum Inneren der Kühlrohre 21 leichter möglich ist.

Die Rohrteilung der Kühlrohre 21 ist größer als die Rohrteilung der Reaktionsrohre 7. Auf der Mantelseite der Kühlrohre 21 ergibt sich dadurch der Vorteil eines verringerten Druckverlustes bei der Strömung des Wärmeträgers 32 durch das Kühlrohrbündel. Bei gleicher Leistung der Umwälzeinrichtung 36 ist der Wärmeträgerstrom größer bzw. die Strömungsgeschwindigkeit des Wärmeträgers 32 höher; die Wärme kann schneller und gleichmäßiger abgeführt werden.

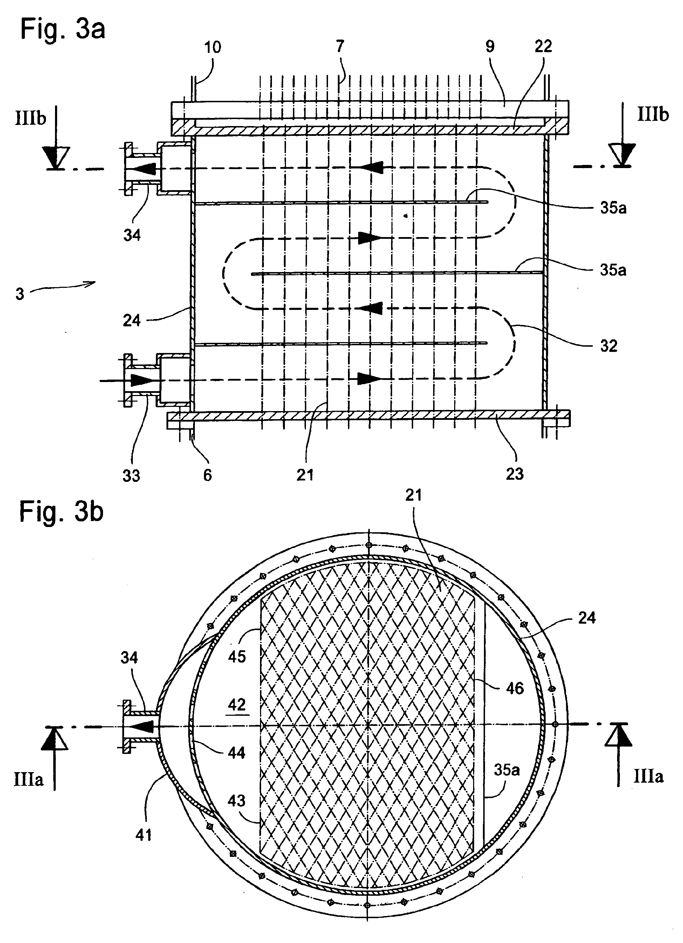

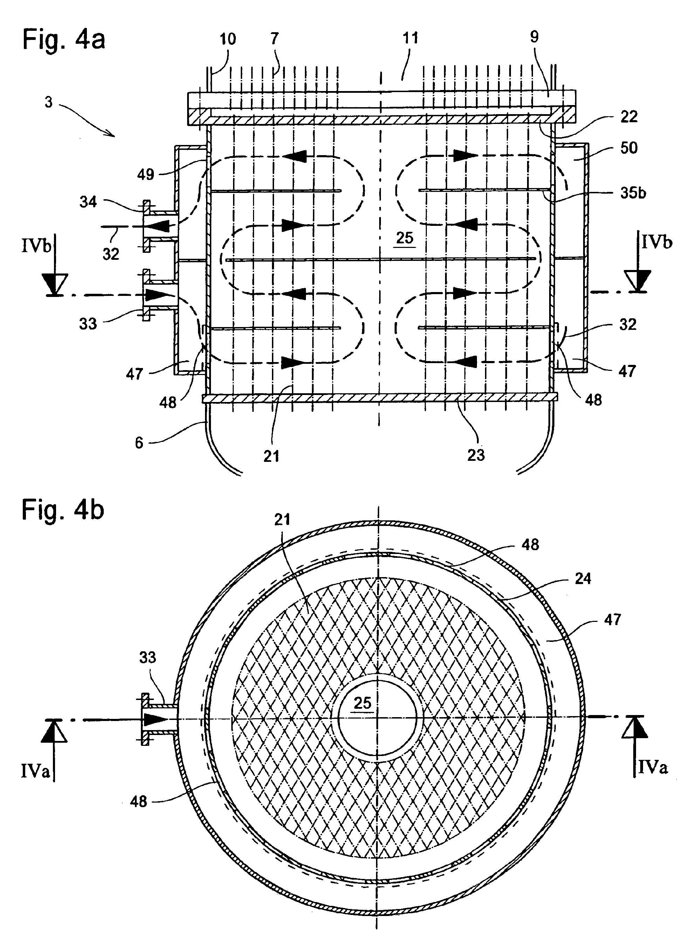

Bei den nachfolgend beschriebenen Ausführungsbeispielen gemäß den Figuren 3a, 3b und 4a, 4b entspricht die Strömungsführung des Wärmeträgers 32 im Nachkühler 3 der im Mantelrohrreaktor 2. Die Figuren 3a und 3b zeigen einen Querstrom-Nachkühler 3, der einem Querstrom-Mantelrohrreaktor 2 nachgeschaltet ist. Die Figuren 4a und 4b zeigen einen Radialstrom-Nachkühler 3, der einem Radialstrom-Mantelreaktor 2 nachgeschaltet ist.

In der Ausführungsform gemäß Figur 3a und 3b sind drei segmentförmige Umlenkbleche 35a in dem Nachkühler 3 angeordnet, die den Wärmeträger 32 insgesamt vier mal horizontal durch den gesamten Querschnitt des Kühlrohrbündels 21 vom Eintrittsstutzen 33 zum Austrittsstutzen 34 führen.

Der Wärmeträger 32 strömt nach dem Eintrittsstutzen 33 zunächst in einen auf der Außenseite des Nachkühler-Mantels 24 aufgesetzten Kasten bzw. Verteilerraum 41 ein, der mit dem Innenraum des Nachkühlers 3 bzw. mit dem Raum 42 zwischen dem Nachkühler-Mantel 24 und der Anströmfläche 43 des Kühlrohrbündels 21 über eine Reihe von Öffnungen 44 in dem Nachkühler-Mantel 24 in Strömungsverbindung steht.

Das Kühlrohrbündel 21 hat die Querschnittsform eines Kreises mit zwei diametral einander gegenüberliegenden, längs Sekanten 45, 46 abgeschnittenen Kreissegmenten, wobei der Wärmeträger-Verteilerraum 41 einer der Sekanten 45 gegenüberliegt und seine Länge in Umfangsrichtung in etwa der Länge der Sekante 45 entspricht.

In einer in den Figuren 4a und 4b dargestellten alternativen Ausführungsform sind der Mantelrohrreaktor 2 und der Nachkühler 3 für eine radiale Strömungsführung des Wärmeträgers 32 ausgebildet. Reaktionsrohrbündel 7 und Kühlrohrbündel 21 haben in diesem Fall die Querschnittsform eines Kreises mit einem rohrfreien inneren Bereich 25. Der Wärmeträger 32 wird hier mittels einer unteren Ringleitung 47 über den gesamten Umfang des Nachkühler-Mantels 24 verteilt und strömt über ebenfalls über den gesamten Umfang verteilte Öffnungen 48 im Mantel 24 in den Innenraum ein, wo der Wärmeträger 32 durch ringförmige und scheibenförmige Umlenkbleche 35b mäanderförmig nach oben geführt wird. Durch obere, über den gesamten Umfang des Nachkühler-Mantels 24 verteilte Öffnungen 49 tritt der Wärmeträger 32 in eine obere Ringleitung 50 aus, aus der er durch einen Austrittsstutzen 34 abgeleitet wird.

In den folgenden Ausführungsbeispielen ist jeweils ein Querstrom-Nachkühler 3 einem Radialstrom-Mantelrohrreaktor 2 nachgeschaltet, d. h. die Strömungsführung des Wärmeträgers 32 im Nachkühler 3 ist eine andere als im Mantelrohrreaktor 2.

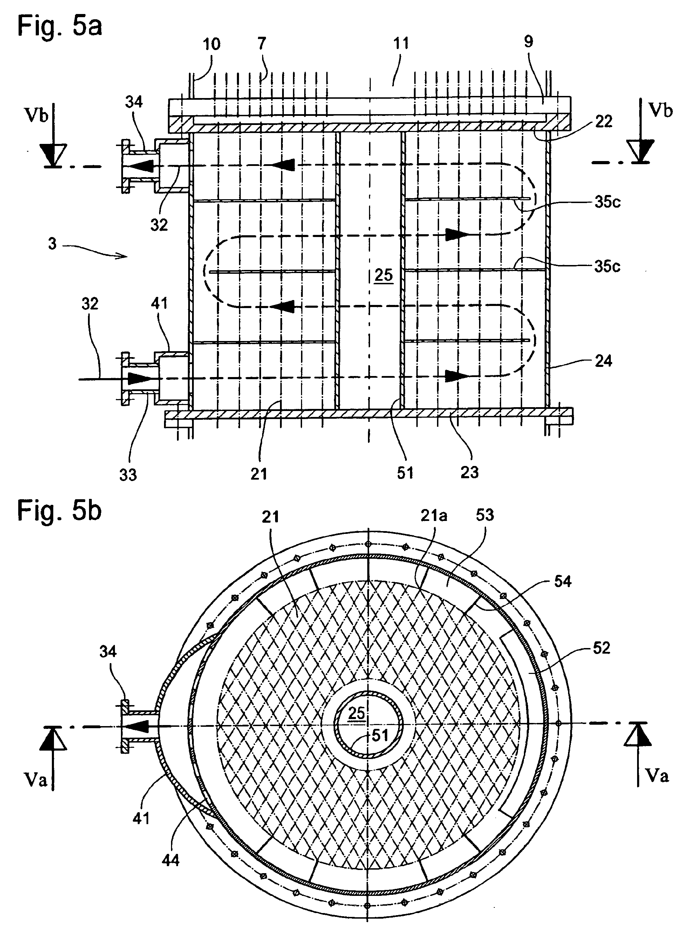

In der in den Figuren 5a und 5b dargestellten Ausführungsform eines Querstrom-Nachkühlers weisen das Reaktionsrohrbündel 7 und das Kühlrohrbündel 21 ebenfalls beide einen kreisförmigen Querschnitt mit einem rohrfreien Innenbereich 25 auf. In dieser Ausführungsform hat der Nachkühler 3 einen inneren Verdrängerzylinder 51 im rohrfreien Innenbereich 25 des Kühlrohrbündels 21. Der Durchmesser des Verdrängerzylinders 51 entspricht im wesentlichen dem Durchmesser des rohrfreien Innenbereichs 11 bzw. 25 des Reaktionsrohrbündels 7 bzw. des Kühlrohrbündels 21. Der Nachkühler 3 weist auf der Außenseite des Nachkühler-Mantels 24 aufgesetzte Verteilerräume 41 zum Zulauf bzw. Ablauf des Wärmeträgers 32 auf. Ähnlich wie bei der Ausführungsform gemäß den Figuren 3a und 3b ist auch hier eine Querdurchströmung des Kühlrohrbündels 21 mit vier Querdurchströmungen ausgebildet.

Die Umlenkbleche 35c sind segmentförmig ausgebildet und weisen zur Umlenkung des Wärmeträgerstroms jeweils eine Randaussparung 52 in Form eines Kreisringabschnitts auf, dessen Länge im wesentlichen der des Verteilerraums 41 entspricht.

Aufgrund des Verdrängerzylinders 51 ergibt sich eine gleichmäßige Durchströmung des gesamten Nachkühlerquerschnitts.

In dem Ringraum 53 zwischen Nachkühler-Mantel 24 und Kühlrohrbündel 21 sind zwischen äußeren Kühlrohren 21a und dem Nachkühler-Mantel 24 zur Vermeidung von Bypass-Strömen Dichtstreifen 54 angeordnet, die die äußeren Kühlrohre 21a bei Querdurchströmung gegenüber dem Nachkühler-Mantel 24 abdichten.

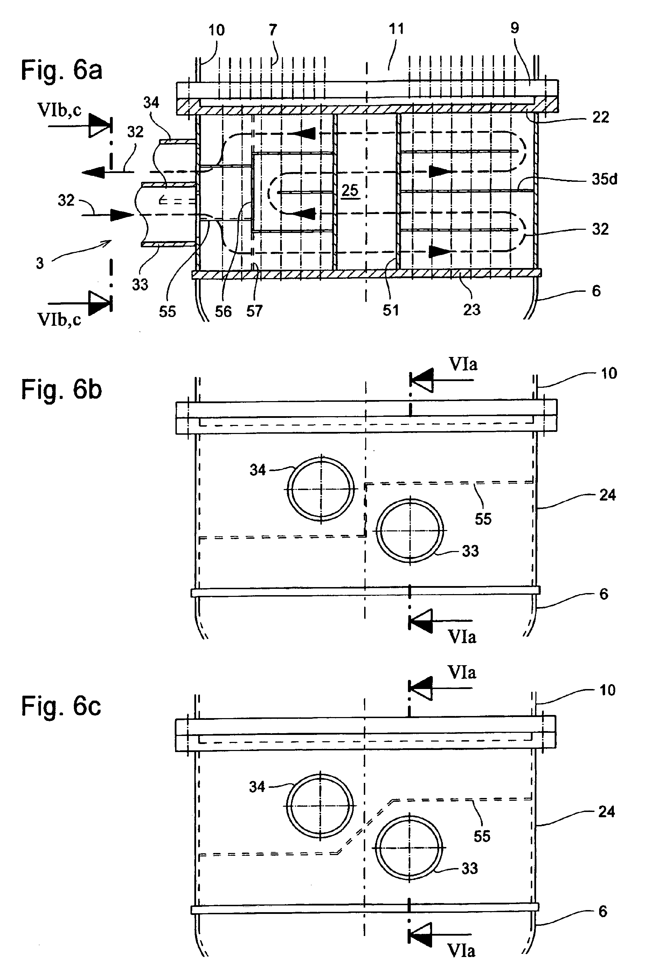

Eine weitere Ausführungsform ist in den Figuren 6a bis 6c dargestellt. Wie in der Ausführungsform gemäß den Figuren 5a und 5b durchströmt der Wärmeträger 32 das Kühlrohrbündel 21 in Querrichtung und ist im rohrfreien Innenbereich 25 ein Verdrängerzylinder 51 angeordnet.

Bei dieser Ausführungsform sind der Zu- und der Ablaufstutzen 33, 34 nicht in Achsrichtung des Nachkühlers 3 übereinander angeordnet, sondern in Umfangsrichtung versetzt angeordnet. Zum Ausgleich des Versatzes sind innerhalb des Nachkühlers 3 entsprechende Umlenkbleche 55 angeordnet. Insbesondere sind zum Ausgleich von in den Endbereichen eventuell auftretenden ungleichförmigen Anströmungen Strömungsleit- und Strömungsverteileinrichtungen 56, 57 angeordnet. Letztere 57 können z. B. als Lochbleche oder Turbulenzgitter ausgebildet sein. Der Verlauf der Umlenkbleche 55 kann dabei den jeweiligen Erfordernissen angepaßt werden, wie in den Figuren 6b und 6c dargestellt.

Der Vorteil dieser Bauweise ist ein kleines Bauvolumen mit vermindertem Platzbedarf sowie Gewichts- und Kostenersparnis. Ein besonderer Vorteil liegt darin, daß durch die versetzte Anordnung die Durchmesser der Zu- und Ablaufstutzen 33, 34 einschließlich ihrer bevorzugt zylindrischen Befestigungsflansche im Verhältnis zur Länge der Kühlrohre 21 relativ groß gewählt werden können. Beispielsweise kann der Innendurchmesser der Zu- und Ablaufstutzen größer sein als 25 % der Kühlrohrlänge.

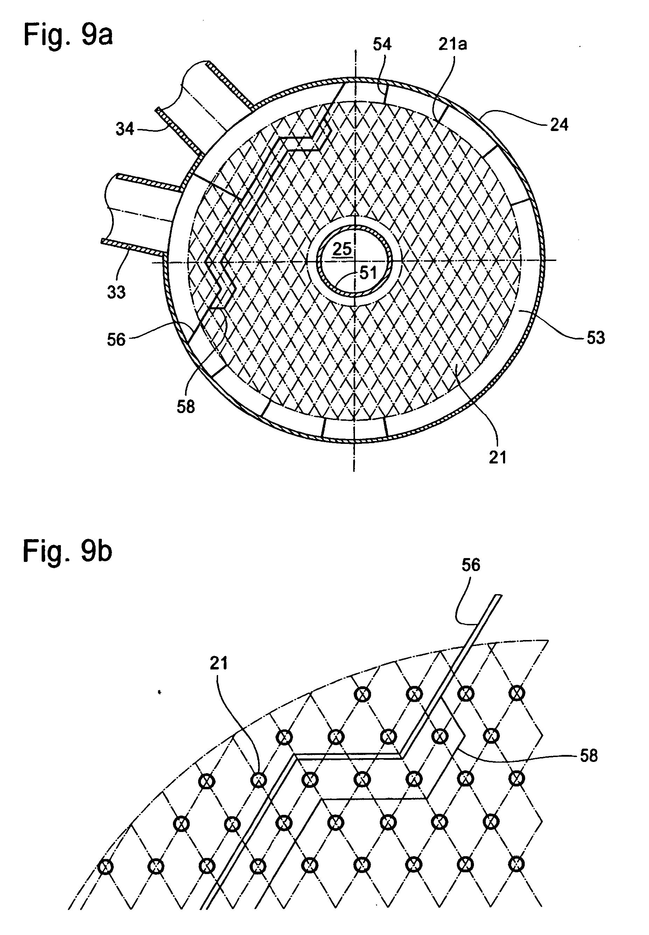

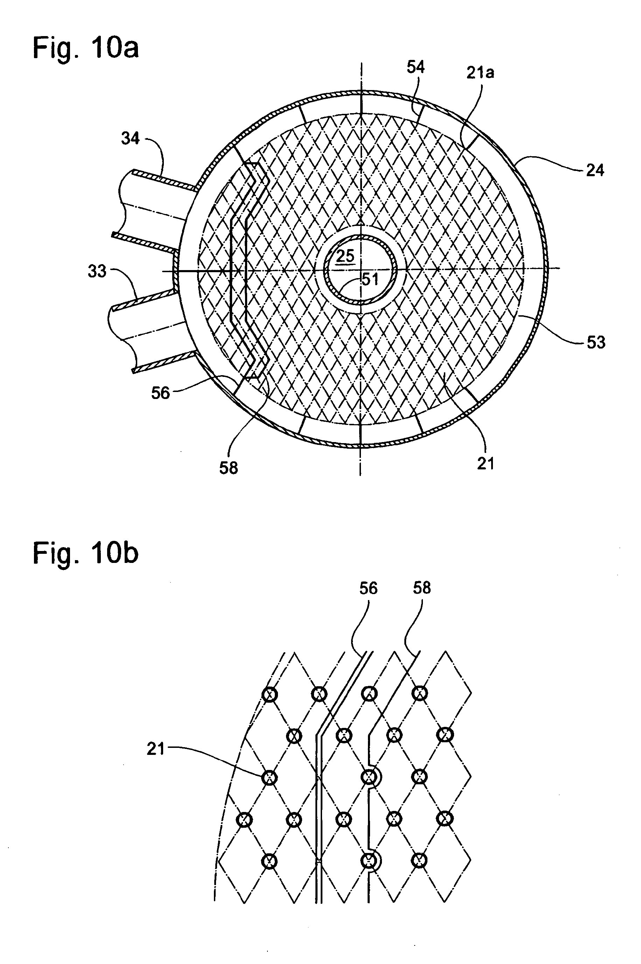

Die Strömungsleit- und Strömungsverteileinrichtungen 56, 57 können in den Gassen zwischen den Kühlrohren 21 angeordnet sein, wie dies in den Figuren 9a und 9b und in den Figuren 10a und 10b mit gegenüber den Figuren 9a und 9b um 30° versetzter Anordnung dargestellt ist. Diese Anordnung von Strömungsleit- und Strömungsverteileinrichtungen 56, 57 in den Rohrgassen wird durch die vergrößterte Rohrteilung im Kühlrohrbündel 21 möglich. Ein besonderer Vorteil dieser Anordnung ist, daß hierfür keine bzw. nur wenige Kühlrohre entfallen müssen, wie in den Figuren 9a und 9b bzw. 10a und 10b dargestellt. Die Gleichmäßigkeit der Wärmeströmung wird somit nicht gestört.

Der Verlauf der Randaussparung 58 der segmentförmigen Umlenkbleche 35d folgt dem Verlauf der vertikalen Strömungsleitbleche 56.

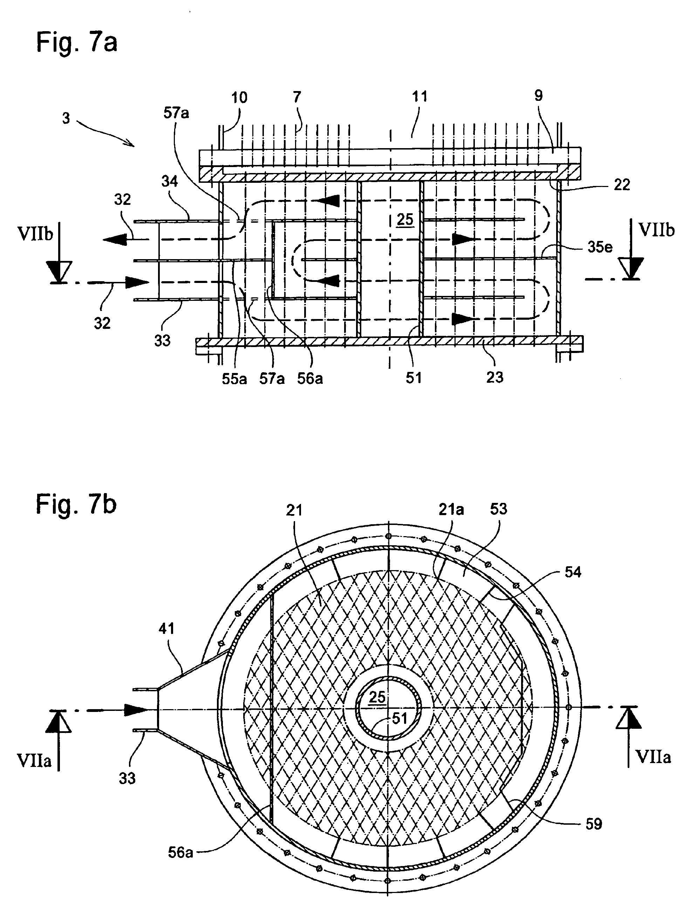

Bei der in Figur 7a dargestellten Ausführungsform sind der Zu- und der Ablaufstutzen 33, 34 unmittelbar übereinander angeordnet. Die Strömungsführung des Wärmeträgers 32 quer durch das Kühlrohrbündel 21 entspricht der der Ausführungsform gemäß Figur 6a.

Das Umlenkblech 55a und das Strömungsleitblech 56a im Eintritts- und im Austrittsbereich des Wärmeträgers 32 verlaufen hier gerade, da kein Versatz ausgeglichen werden muß. Die Verteilung des Wärmeträgers 32 erfolgt durch horizontal verlaufende Lochbleche 57a. Die Randaussparung 59 der segmentförmigen Umlenkbleche 35e erstreckt sich etwas in das Kühlrohrbündel 21 hinein. Der Ringraum 53 zwischen den radial äußeren Kühlrohren 21a und dem Nachkühler-Mantel 24 ist durch Dichtstreifen 54 abgedichtet.

Der Nachkühler 3 kann in der Weise weiter optimiert werden, daß eine weitere Unterteilung des quer durchströmten Kühlrohrbündels 21 mit weiteren segmentförmigen Umlenkblechen erfolgt. Dies führt zu einer weiteren Verringerung des Wärmeträgerbedarfs.

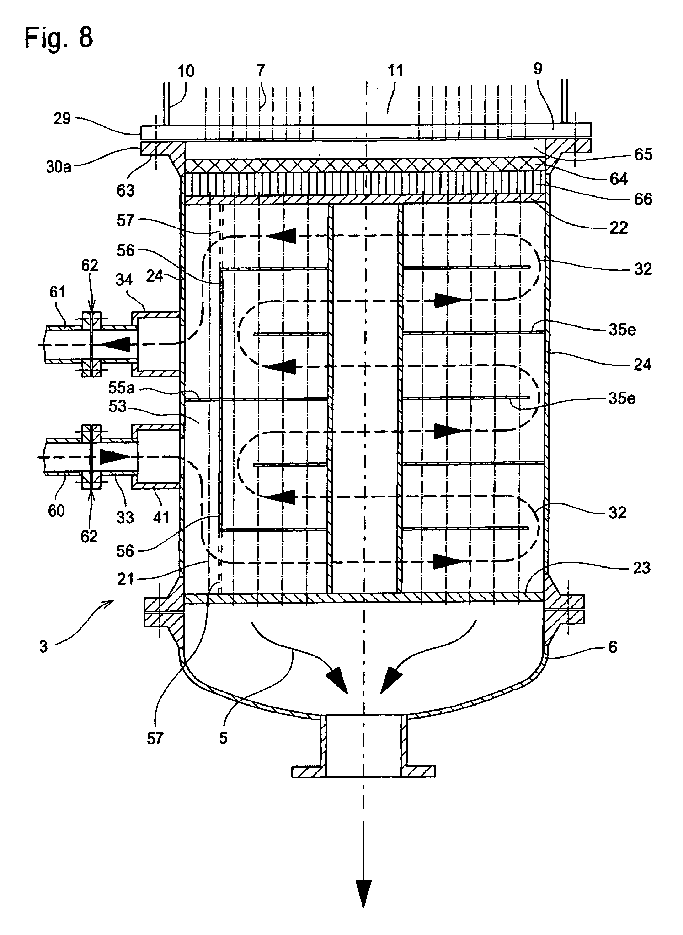

Figur 8 zeigt eine der Figur 7a ähnliche Zu- und Ableitung sowie Stromführung des Wärmeträgers 32. In dieser Ausführungsform sind der Zulaufstutzen 33 und der Ablaufstutzen 34 in vertikaler Richtung mit Abstand übereinander angeordnet.

Die Zulauf- und Ablaufleitungen 60, 61 für den Wärmeträger 32 sind durch lösbare Verbindungen, vorzugsweise Flanschverbindungen 62, an den Zulauf- bzw. an den Ablaufstutzen 33, 34 angeschlossen. Wenn diese Flanschverbindungen 62 gelöst sind, kann der Nachkühler 3 vom Mantelrohrreaktor 2 leicht getrennt werden.

Der Wärmeträger 32 wird durch ein vertikal verlaufendes Strömungsleitblech 56 und fünf horizontal verlaufende segmentförmige Umlenkbleche 35e mäanderförmig sechs mal quer durch das Kühlrohrbündel 21 vom Zulaufstutzen 33 zum Ablaufstutzen 34 geführt.

Bei dem in Figur 8 dargestellten Ausführungsbeispiel ist der Flansch 30a des Nachkühlers 3 als Integralflansch mit konischem Übergang von Flanschblatt 63 zum Nachkühler-Mantel 24 ausgeführt. Aus konstruktiven Gründen kann hierdurch der Mantel 24 des Nachkühlers 3 einen kleineren Außendurchmesser aufweisen als der Mantel 10 des Mantelrohrreaktors 3. Hieraus ergibt sich der Vorteil, daß der Ringraum 53 zwischen Kühlrohrbündel 21 und Nachkühler-Mantel 24 verkleinert werden kann. Für die Verteilung des Wärmeträgers 32 beim Eintritt in den Nachkühler 3, zum axialen Transport von einem Kühlrohrbündelabschnitt zum anderen und zur Sammlung zum Ablaufstutzen 34 ist er noch groß genug. Der in Strömungsrichtung seitlich gelegene unerwünschte Ringraum 53, der durch Dichtstreifen 54 abgetrennt werden muß, wird jedoch verkleinert.

Um die Gleichmäßigkeit der Verteilung des aus den Reaktionsrohren 7 austretenden Reaktionsgases 5 auf den Nachkühlerquerschnitt zu verbessern, sind in einem Zwischenraum 64 zwischen dem unteren Rohrboden 9 des Mantelrohrreaktors 2 und dem oberen Rohrboden 22 des Nachkühlers 3 Strömungsleiteinrichtungen 65 und Einbauten 66, insbesondere ein Vergleichmäßigungsgitter, ausgebildet.

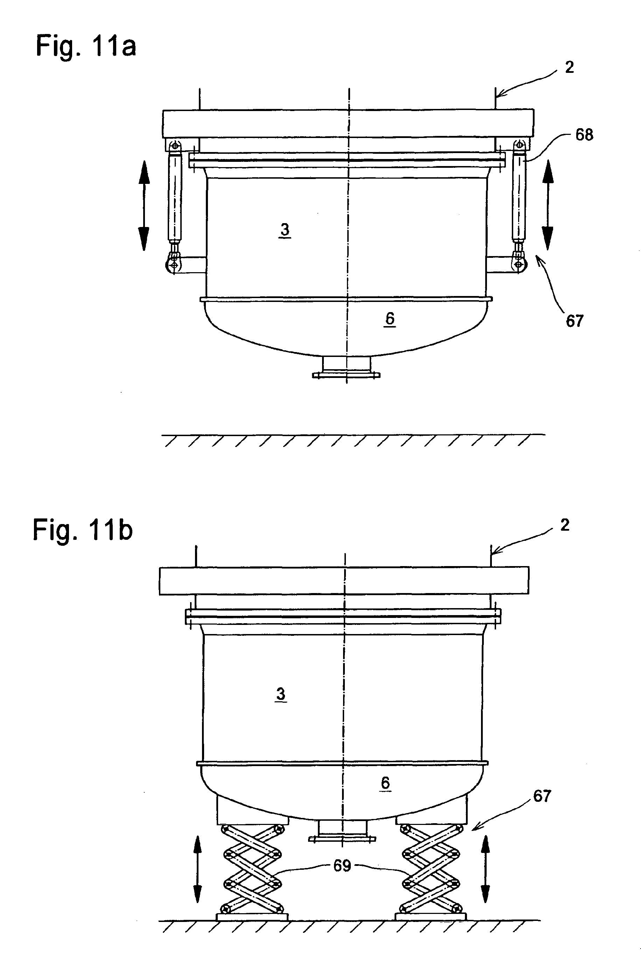

Zur Erleichterung von Wartung und Reinigung ist der Nachkühler 3 mit dem Mantelrohrreaktor 2 gemäß den Figuren 11a und 11b lösbar verbunden. Durch eine Vorrichtung 67 zum Absenken und Anheben kann der Nachkühler 3 vom Mantelrohrreaktor 2 getrennt bzw. wieder mit diesem verbunden werden.

Gemäß Figur 11a ist eine Vorrichtung zum Absenken und Wiederanheben des Nachkühlers in Form von Hubzylindern 68 ausgebildet, die direkt zwischen Mantelrohrreaktor 2 und Nachkühler 3 angebracht sind.

Gemäß Figur 11b sind unterhalb des Nachkühlers Hubvorrichtungen angebracht, die beispielsweise in Form von Scherengittern 69 ausgebildet sein können.

Die Vorrichtungen 67 zum Absenken und Wiederanheben des Nachkühlers 3 können beispielsweise spindelbetriebene oder hydraulische Vorrichtungen sein.

Die lösbare Verbindung zwischen Mantelrohrreaktor 2 und Nachkühler 3 in Verbindung mit einer Vorrichtung 67 zum Absenken und Wiederanheben des Nachkühlers 3 ermöglicht eine gute Zugänglichkeit der Kühlrohre 21, die deren Wartungs- und Reinigungsmöglichkeiten weiter verbessert.

## Patentansprüche

1. Reaktoranordnung zur Durchführung katalytischer Gasphasenreaktionen, mit einem Mantelrohrreaktor, der ein von einem Mantel umgebenes Rohrbündel mit einer Anzahl katalysatorgefüllter Reaktionsrohre aufweist, wobei die Reaktionsrohre alle den gleichen Innendurchmesser aufweisen und das Reaktionsrohrbündel eine konstante Rohrteilung T₁ aufweist und senkrecht zur Längsachse der Reaktionsrohre eine berohrte Querschnittsfläche belegt, und mit einem separaten, direkt nachgeschalteten Nachkühler, der ein von einem Mantel umgebenes Rohrbündel mit Kühlrohren aufweist, deren Anzahl geringer ist als die der Reaktionsrohre, wobei die Kühlrohre alle den gleichen Innendurchmesser aufweisen und das Kühlrohrbündel eine konstante Rohrteilung T₂ aufweist und senkrecht zur Längsachse der Kühlrohre ebenfalls eine berohrte Querschnittsfläche belegt, wobei die Rohrteilung jeweils der kürzeste Mittelpunktsabstand zweier benachbarter Rohre ist, und wobei die Reaktionsrohre (7) und die Kühlrohre (21) jeweils rautenförmig angeordnet sind und der lichte Gesamtdurchströmungsquerschnitt aller Kühlrohre (21) kleiner ist als der lichte Gesamtdurchströmungsquerschnitt aller Reaktionsrohre (7), **dadurch gekennzeichnet, daß** die Rohrteilung T₂ der Kühlrohre (21) größer ist als die Rohrteilung T₁ der Reaktionsrohre (7) und ein Überstand der Ränder der jeweiligen berohrten Querschnittsflächen (26, 27) zueinander höchstens die Rohrteilung T₂ der Kühlrohre beträgt, so daß die Durchströmungsgeschwindigkeit in den Kühlrohren (21) größer ist als die in den Reaktionsrohren (7).

2. Reaktoranordnung nach Anspruch 1, **dadurch gekennzeichnet, daß** die Kühlrohranzahl zwischen 1/10 und 9/10 der Reaktionsrohranzahl beträgt.

3. Reaktoranordnung nach Anspruch 2, **dadurch gekennzeichnet, daß** die Kühlrohranzahl zwischen 1/5 und 1/2 der Reaktionsrohranzahl beträgt.

4. Reaktoranordnung nach einem der Ansprüche 1 bis 3, **dadurch gekennzeichnet, daß** der Mantelrohrreaktor (2) einen das Reaktionsrohrbündel (7) umgebenden zylindrischen Mantel (10) und der Nachkühler (3) einen das Kühlrohrbündel (21) umgebenden zylindrischen Mantel (24) aufweist, wobei der Manteldurchmesser des Nachkühlers (3) kleiner ist als der Manteldurchmesser des Mantelrohrreaktors (2).

5. Reaktoranordnung nach einem der Ansprüche 1 bis 4, **dadurch gekennzeichnet, daß** im Zwischenraum (64) zwischen Mantelrohrreaktor (2) und Nachkühler (3) Strömungsleiteinrichtungen (65) angeordnet sind.

6. Reaktoranordnung nach einem der Ansprüche 1 bis 5, **dadurch gekennzeichnet, daß** im Zwischenraum (64) zwischen Mantelrohrreaktor (2) und Nachkühler (3) Einbauten (66) zur Strömungsvergleichmäßigung angeordnet sind.

7. Reaktoranordnung nach einem der Ansprüche 1 bis 6, **dadurch gekennzeichnet, daß** der Innendurchmesser der Kühlrohre (21) mindestens gleich dem Innendurchmesser der Reaktionsrohre (7) ist.

8. Reaktoranordnung nach Anspruch 7, **dadurch gekennzeichnet, daß** der Innendurchmesser der Kühlrohre (21) zwischen dem 1,1-fachen bis 3-fachen des Innendurchmessers der Reaktionsrohre (7) liegt.

9. Reaktoranordnung nach einem der Ansprüche 1 bis 8, **dadurch gekennzeichnet, daß** in den Kühlrohren (21) katalysatorfreie turbulenzerzeugende Einbauten angeordnet sind, die den gasseitigen Wärmeübergang steigern.

10. Reaktoranordnung nach Anspruch 9, **dadurch gekennzeichnet, daß** die Einbauten aus einem spröden Material gebildet sind.

11. Reaktoranordnung nach einem der Ansprüche 1 bis 10, **dadurch gekennzeichnet, daß** ein Wärmeträger (32) das Kühlrohrbündel (21) radial durchströmt.

12. Reaktoranordnung nach einem der Ansprüche 1 bis 10, **dadurch gekennzeichnet, daß** ein Wärmeträger (32) das Kühlrohrbündel (21) quer durchströmt.

13. Reaktoranordnung nach Anspruch 12, **dadurch gekennzeichnet, daß** das Kühlrohrbündel (21) einen rohrfreien Innenbereich (25) aufweist und darin ein Verdrängerzylinder (51) angeordnet ist.

14. Reaktoranordnung nach Anspruch 12 oder 13, **dadurch gekennzeichnet, daß** im Kühlrohrbündel (21) mindestens 2 Querstromwege ausgebildet sind.

15. Reaktoranordnung nach einem der Ansprüche 12 bis 14, **dadurch gekennzeichnet, daß** beim Nachkühler (3) die lichte Höhe der Zu- und Ablaufstutzen (33, 34) für den Wärmeträger (32) größer ist als 25 % der Kühlrohrlänge.

16. Reaktoranordnung nach einem der Ansprüche 12 bis 15, **dadurch gekennzeichnet, daß** Strömungsleit- und Strömungsverteileinrichtungen (56, 57) zur gleichmäßigen Zu- und Abführung des Wärmeträgers (32) zu bzw. von den Querstromzonen im Inneren des Kühlrohrbündels (21) angeordnet sind.

17. Reaktoranordnung nach Anspruch 16, **dadurch gekennzeichnet, daß** die Strömungsleit- und die Strömungsverteileinrichtungen (56, 57) im Wesentlichen in Gassen zwischen den Kühlrohrreihen liegen.

18. Reaktoranordnung nach Anspruch 17, **dadurch gekennzeichnet, daß** die Strömungsverteilungseinrichtungen (57) Lochbleche oder Turbulenzgitter aufweisen.

19. Reaktoranordnung nach einem der Ansprüche 1 bis 18, **dadurch gekennzeichnet, daß** der Nachkühler (3) über einen vom Mantelrohrreaktor (2) unabhängigen Wärmeträgerkreislauf verfügt.

20. Reaktoranordnung nach einem der Ansprüche 1 bis 19, **dadurch gekennzeichnet, daß** beim Nachkühler (3) die Zu- und Ablaufstutzen (33, 34) für einen Wärmeträger (32) in Bezug auf eine normal zu den Kühlrohren (21) stehende Ebene versetzt nebeneinander angeordnet sind.

21. Reaktoranordnung nach einem der Ansprüche 1 bis 20, **dadurch gekennzeichnet, daß** der Nachkühler (3) lösbar mit dem Mantelrohrreaktor (2) verbunden ist.

22. Reaktoranordnung nach Anspruch 21, **dadurch gekennzeichnet, daß** der Nachkühler (3) mit einer Vorrichtung (67) zum Absenken und Wiederanheben ausgestattet ist.

23. Reaktoranordnung nach Anspruch 21 oder 22, **dadurch gekennzeichnet, daß** an den Nachkühler (3) eine Einheit, die Pumpen (36), Kühler (37) und Regeleinheit aufweist, lösbar angeschlossen ist.

24. Verwendung einer Reaktoranordnung nach einem der Ansprüche 1 bis 23 für Oxidations-, Hydrierungs-, Dehydrierungs-, Nitrierungs-, Alkylierungsprozesse und dergleichen.

25. Verwendung einer Reaktoranordnung nach einem der Ansprüche 1 bis 23 für die Herstellung von Ketonen, Methylisobutylketon, Mercaptan, Isopren, Anthrachinon, o-Kresol, Ethylenhexan, Furfurol, Acetylen, Vinylacetat, Isopropylchlorid, Naphtalsäureanhydrid, Vinylchlorid, Oxoalkohol, Pyrotol, Styrol, Methansäurenitril, Polyphenylenoxid, Dimethylphenol, Pyridinaldehyd, Therban, Alphaolefinen, Vitamin B6, Blausäure, Anilin, Methansäurenitral, Difluormethan, 4-Methyl-2-Pentanon, Tetrahydrofuran und die
- Oxidation von Dimethylbenzolen (m,o,p) zu den entsprechenden Mono- und Dialdehyden,
- Oxidation von Dimethylbenzolen (m,o,p) zu den entsprechenden Mono- und Dicarbonsäuren bzw. deren Anhydriden,
- Oxidation von Trimethylbenzolen zu den entsprechenden Mono-, Di- und Trialdehyden,
- Oxidation von Trimethylbenzolen zu den entsprechenden Mono-, Di- und Tricarbonsäuren bzw. deren Anhydriden,
- Oxidation von Durol zu Pyromellithsäureanhydrid,
- Oxidation von gamma- bzw. beta-Picolin zu gamma- bzw. beta-Picolincarbaldehyd,
- Oxidation von gamma- bzw. beta-Picolin zu Isonicotinsäure bzw. Nicotinsäure,
- Oxidation von Propen zu Acrolein,
- Oxidation von Acrolein zu Acrylsäure,
- Oxidation von Propan zu Acrolein,
- Oxidation von Propan zu Acrylsäure,
- Oxidation von Butan zu MSA,
- Oxidation von Raffinat zu MSA,
- Oxidation von i-Buten zu Methacrolein,
- Oxidation von Methacrolein zu Methacrylsäure,
- Oxidation von Methacrolein zu Methylmethacrylat,
- Oxidation von i-Butan zu Methacrolein,
- Oxidation von i-Butan zu Methacrylsäure,
- Ammonoxidation von Dimethylbenzolen (m,o,p) zu den entsprechenden Mono- und Dinitrilen,
- Ammonoxidation von Trimethylbenzolen zu den entsprechenden Mono- und Di- bzw. Trinitrilen,
- Ammonoxidation von Propan zu Acrylnitril,
- Ammonoxidation von Propen zu Acrylnitril,
- Ammonoxidation von beta-Picolin zu 3-Cyanopyridin,
- Ammonoxidation von gamma-Picolin zu 4-Cyanopyridin,
- Oxidation von Methanol zu Formaldehyd,
- Oxidation von Naphthalin und/oder O-Xylol, ggf. im Mischbetrieb, zu Phthalsäureanhydrid,
- Oxidation von Ethan zu Essigsäure,
- Oxidation von Ethanol zu Essigsäure,
- Oxidation von Geraniol zu Citral,
- Oxidation von Ethen zu Ethylenoxid,
- Oxidation von Propen zu Propylenoxid,
- Oxidation von Chlorwasserstoff zu Chlor,
- Oxidation von Glykol zu Glyoxal und
- Hydrierung von MSA zu Butandiol.

## Claims

1. A reactor arrangement for carrying out catalytic gas phase reactions, comprising a shell-and-tube reactor which includes a tube bundle surrounded by a shell with a number of catalyst-filled reaction tubes, wherein the reaction tubes all have the same inside diameter and the reaction tube bundle has a constant tube pitch T₁ and perpendicularly to the longitudinal axis of the reaction tubes occupies a cross-sectional area equipped with tubes, and comprising a separate, directly succeeding aftercooler which includes a tube bundle surrounded by a shell with cooling tubes whose number is smaller than that of the reaction tubes, wherein the cooling tubes all have the same inside diameter and the cooling tube bundle has a constant tube pitch T₂ and perpendicularly to the longitudinal axis of the cooling tubes likewise occupies a cross-sectional area equipped with tubes, wherein the tube pitch each is the shortest center distance of two adjacent tubes, and wherein the reaction tubes (7) and the cooling tubes (21) each are arranged in a rhombic pattern and the clear total flow cross-section of all cooling tubes (21) is smaller than the clear total flow cross-section of all reaction tubes (7), **characterized in that** the tube pitch T₂ of the cooling tubes (21) is greater than the tube pitch T₁ of the reaction tubes (7) and a protrusion of the edges of the respective cross-sectional areas (26, 27) equipped with tubes relative to each other is not more than the tube pitch T₂ of the cooling tubes, so that the flow velocity in the cooling tubes (21) is greater than that in the reaction tubes (7).

2. The reactor arrangement according to claim 1, **characterized in that** the number of cooling tubes lies between 1/10 and 9/10 of the number of reaction tubes.

3. The reactor arrangement according to claim 2, **characterized in that** the number of cooling tubes lies between 1/5 and 1/2 of the number of reaction tubes.

4. The reactor arrangement according to any of claims 1 to 3, **characterized in that** the shell-and-tube reactor (2) includes a cylindrical shell (10) surrounding the reaction tube bundle (7) and the aftercooler (3) includes a cylindrical shell (24) surrounding the cooling tube bundle (21), wherein the shell diameter of the aftercooler (3) is smaller than the shell diameter of the shell-and-tube reactor (2).

5. The reactor arrangement according to any of claims 1 to 4, **characterized in that** in the space (64) between shell-and-tube reactor (2) and aftercooler (3) flow guiding devices (65) are arranged.

6. The reactor arrangement according to any of claims 1 to 5, **characterized in that** in the space (64) between shell-and-tube reactor (2) and aftercooler (3) internal fittings (66) are arranged for flow homogenization.

7. The reactor arrangement according to any of claims 1 to 6, **characterized in that** the inside diameter of the cooling tubes (21) is at least equal to the inside diameter of the reaction tubes (7).

8. The reactor arrangement according to claim 7, **characterized in that** the inside diameter of the cooling tubes (21) lies between 1.1 times to 3 times the inside diameter of the reaction tubes (7).

9. The reactor arrangement according to any of claims 1 to 8, **characterized in that** in the cooling tubes (21) turbulence-producing internal fittings free from catalyst are arranged, which increase the gas-side heat transfer.

10. The reactor arrangement according to claim 9, **characterized in that** the internal fittings are formed of a brittle material.

11. The reactor arrangement according to any of claims 1 to 10, **characterized in that** a heat carrier (32) radially flows through the cooling tube bundle (21).

12. The reactor arrangement according to any of claims 1 to 10, **characterized in that** a heat carrier (32) transversely flows through the cooling tube bundle (21).

13. The reactor arrangement according to claim 12, **characterized in that** the cooling tube bundle (21) includes a tube-free inner region (25) and a displacement cylinder (51) is arranged therein.

14. The reactor arrangement according to claim 12 or 13, **characterized in that** in the cooling tube bundle (21) at least two cross-flow paths are formed.

15. The reactor arrangement according to any of claims 12 to 14, **characterized in that** in the aftercooler (3) the clear height of the inlet and outlet nozzles (33, 34) for the heat carrier (32) is greater than 25 % of the cooling tube length.

16. The reactor arrangement according to any of claims 12 to 15, **characterized in that** the flow guiding and flow distributing devices (56, 57) are arranged for the uniform supply and discharge of the heat carrier (32) to and from the cross-flow zones in the interior of the cooling tube bundle (21).

17. The reactor arrangement according to claim 16, **characterized in that** the flow guiding and flow distributing devices (56, 57) substantially are located in lanes between the cooling tube rows.

18. The reactor arrangement according to claim 17, **characterized in that** the flow distributing devices (57) include perforated plates or turbulence gratings.

19. The reactor arrangement according to any of claims 1 to 18, **characterized in that** the aftercooler (3) is provided with a heat carrier circuit independent of the shell-and-tube reactor (2).

20. The reactor arrangement according to any of claims 1 to 19, **characterized in that** in the aftercooler (3) the inlet and outlet nozzles (33, 34) for a heat carrier (32) are arranged offset one beside the other with respect to a plane extending normal to the cooling tubes (21).

21. The reactor arrangement according to any of claims 1 to 20, **characterized in that** the aftercooler (3) is releasably connected with the shell-and-tube reactor (2).

22. The reactor arrangement according to claim 21, **characterized in that** the aftercooler (3) is equipped with a device (67) for lowering and relifting.

23. The reactor arrangement according to claim 21 or 22, **characterized in that** a unit, which includes pumps (36), cooler (37) and control unit, is releasably connected to the aftercooler (3).

24. Use of a reactor arrangement according to any of claims 1 to 23 for Oxidation, hydrogenation, dehydrogenation, nitration, alkylation processes and the like.

25. Use of a reactor arrangement according to any of claims 1 to 23 for the production of ketones, methyl isobutyl ketone, mercaptan, isoprene, anthraquinone, o-cresol, ethylene hexane, furfural, acetylene, vinyl acetate, isopropyl chloride, naphthalic anhydride, vinyl chloride, oxo alcohol, pyrotol, styrene, methane acid nitrile, polyphenylene oxide, dimethyl phenol, pyridine aldehyde, therban, alpha-olefins, vitamin B6, hydrocyanic acid, aniline, methane acid nitral, difluoromethane, 4-methyl-2-pentanone, tetrahydrofuran and
oxidation of dimethylbenzenes (m, o, p) to obtain the corresponding mono- and dialdehydes, oxidation of dimethylbenzenes (m, o, p) to obtain the corresponding mono- and dicarboxylic acids and their anhydrides,
oxidation of trimethylbenzenes to obtain the corresponding mono-, di- and trialdehydes,
oxidation of trimethylbenzenes to obtain the corresponding mono-, di- and tricarboxylic acids and their anhydrides,
oxidation of durene to obtain pyromellitic anhydride,
oxidation of gamma- or beta-picoline to obtain gamma- or beta-picoline carbaldehyde,
oxidation of gamma- or beta-picoline to obtain isonicotinic acid or nicotinic acid,
oxidation of propene to obtain acrolein,
oxidation of acrolein to obtain acrylic acid,
oxidation of propane to obtain acrolein,
oxidation of propane to obtain acrylic acid,
oxidation of butane to obtain maleic anhydride (MA),
oxidation of raffinate to obtain MA,
oxidation of i-butene to obtain methacrolein,
oxidation of methacrolein to obtain methacrylic acid,
oxidation of methacrolein to obtain methyl methacrylate,
oxidation of i-butane to obtain methacrolein,
oxidation of i-butane to obtain methacrylic acid,
ammonoxidation of dimethylbenzenes (m, o, p) to obtain the corresponding mono- and dinitriles,
ammonoxidation of trimethylbenzenes to obtain the corresponding mono-, di- and trinitriles,
ammonoxidation of propane to obtain acrylonitrile,
ammonoxidation of propene to obtain acrylonitrile, ammonoxidation of beta-picoline to obtain 3-cyanopyridine, ammonoxidation of gamma-picoline to obtain 4-cyanopyridine, oxidation of methanol to obtain formaldehyde,
oxidation of naphthalene and/or o-xylene, possibly in mixed operation, to obtain phthalic anhydride,
oxidation of ethane to obtain acetic acid,
oxidation of ethanol to obtain acetic acid,
oxidation of geraniol to obtain citral,
oxidation of ethene to obtain ethylene oxide,
oxidation of propene to obtain propylene oxide,
oxidation of hydrogen chloride to obtain chlorine,
oxidation of glycol to obtain glyoxal and
hydrogenation of MA to obtain butane diol.

## Revendications

1. Ensemble réacteur pour la mise en oeuvre de réactions catalytiques en phase gazeuse, comprenant un réacteur tubulaire à enveloppe, qui comprend un faisceau de tubes entouré par une enveloppe avec un certain nombre de tubes de réaction remplis d'un catalyseur, dans lequel les tubes de réaction présentent tous le même diamètre intérieur et le faisceau de tubes de réaction présente une répartition constante T1 des tubes et occupe perpendiculairement à l'axe longitudinal des tubes de réaction une surface de section transversale remplie de tubes, et comprenant un dispositif de refroidissement successif séparé, branché directement à la suite, qui comprend un faisceau de tubes entouré par une enveloppe, avec des tubes de refroidissement dont le nombre est plus faible que celui des tubes de réaction, dans lequel les tubes de refroidissement présentent tous le même diamètre intérieur, et le faisceau de tubes de refroidissement présente une répartition constante T2 des tubes et occupe perpendiculairement à l'axe longitudinal des tubes de refroidissement également une surface de section transversale remplie de tubes, dans lequel la répartition des tubes est à chaque fois la distance la plus courte entre les centres de deux tubes voisins, et dans lequel les tubes de réaction (7) et les tubes de refroidissement (21) sont agencés respectivement en formant des losanges, et la section d'écoulement totale libre de tous les tubes de refroidissement (21) est plus petite que la section d'écoulement totale libre de tous les tubes de réaction (7), **caractérisé en ce que** la répartition T2 des tubes de refroidissement (21) est plus grande que la répartition T1 des tubes de réaction (7), et un dépassement des bordures des surfaces de section transversale respectives remplies de tubes (26, 27) les unes par rapport aux autres s'élève au maximum à la répartition T2 des tubes de refroidissement, de sorte que la vitesse d'écoulement dans les tubes de refroidissement (21) est plus grande que celle dans les tubes de réaction (7).

2. Ensemble réacteur selon la revendication 1, **caractérisé en ce que** le nombre de tubes de refroidissement s'élève entre 1/10 et 9/10 du nombre des tubes de réaction.

3. Ensemble réacteur selon la revendication 2, **caractérisé en ce que** le nombre des tubes de refroidissement s'élève entre 1/5 et ½ du nombre des tubes de réaction.

4. Ensemble réacteur selon l'une des revendications 1 à 3, **caractérisé en ce que** le réacteur tubulaire à enveloppe (2) comprend une enveloppe cylindrique (10) qui entoure le faisceau de tubes de réaction (7) et le dispositif de refroidissement successif (3) comprend une enveloppe (24) cylindrique qui entoure le faisceau de tubes de refroidissement (21), dans lequel le diamètre de l'enveloppe du dispositif de refroidissement successif (3) est plus petit que le diamètre de l'enveloppe du réacteur tubulaire à enveloppe (2).

5. Ensemble réacteur selon l'une des revendications 1 à 4, **caractérisé en ce que** des dispositifs de guidage d'écoulement (65) sont agencés dans l'espace intermédiaire (64) entre le réacteur tubulaire à enveloppe (2) et le dispositif de refroidissement successif (3).

6. Ensemble réacteur selon l'une des revendications 1 à 5, **caractérisé en ce que** des inserts (66) destinés à la régularisation de l'écoulement sont agencés dans l'espace intermédiaire (64) entre le réacteur tubulaire à enveloppe (2) et le dispositif de refroidissement successif (3).

7. Ensemble réacteur selon l'une des revendications 1 à 6, **caractérisé en ce que** le diamètre intérieur des tubes de refroidissement (21) est au moins égal au diamètre intérieur des tubes de réaction (7).

8. Ensemble réacteur selon la revendication 7, **caractérisé en ce que** le diamètre intérieur des tubes de refroidissement (21) est compris entre 1,1 fois et 3 fois le diamètre intérieur des tubes de réaction (7).

9. Ensemble réacteur selon l'une des revendications 1 à 8, **caractérisé en ce que** des inserts dépourvus de catalyseur et engendrant des turbulences sont agencés dans les tubes de refroidissement (21), qui augmentent le transfert de chaleur du côté des gaz.

10. Ensemble réacteur selon la revendication 9, **caractérisé en ce que** les inserts sont réalisés en un matériau cassant.

11. Ensemble réacteur selon l'une des revendications 1 à 10, **caractérisé en ce qu'**un véhicule de chaleur (32) traverse radialement le faisceau de tubes de refroidissement (21).

12. Ensemble réacteur selon l'une des revendications 1 à 10, **caractérisé en ce qu'**un véhicule de chaleur (32) traverse perpendiculairement le faisceau de tubes de refroidissement (21).

13. Ensemble réacteur selon la revendication 12, **caractérisé en ce que** le faisceau de tubes de refroidissement (21) comporte une zone intérieure (25) dépourvue de tubes et un cylindre de refoulement (51) est agencé dans cette zone.

14. Ensemble réacteur selon la revendication 12 ou 13, **caractérisé en ce qu'**au moins deux voies d'écoulement transversales sont réalisées dans le faisceau de tubes de refroidissement (21).

15. Ensemble réacteur selon l'une des revendications 12 à 14, **caractérisé en ce que** dans le dispositif de refroidissement successif (3) la hauteur libre des pipes d'amenée et de sortie (33, 34) pour le véhicule de chaleur (32) est plus grande que 25 % de la longueur des tubes de refroidissement.

16. Ensemble réacteur selon l'une des revendications 12 à 15, **caractérisé en ce que** des moyens de guidage et de répartition d'écoulement (56, 57) destinés à régulariser l'amenée et la sortie du véhicule de chaleur (32) vers ou respectivement depuis les zones d'écoulement transversal sont agencés à l'intérieur du faisceau de tubes de refroidissement (21).

17. Ensemble réacteur selon la revendication 16, **caractérisé en ce que** les moyens de guidage et de répartition d'écoulement (56, 57) sont situés sensiblement dans des voies entre les rangées de tubes de refroidissement.

18. Ensemble réacteur selon la revendication 17, **caractérisé en ce que** les moyens de répartition d'écoulement (57) comprennent des plaques à trous ou des grilles à turbulence.

19. Ensemble réacteur selon l'une des revendications 1 à 18, **caractérisé en ce que** le dispositif de refroidissement successif (3) dispose d'un circuit pour véhicule de chaleur indépendant du réacteur tubulaire à enveloppe (2).

20. Ensemble réacteur selon l'une des revendications 1 à 19, **caractérisé en ce que** dans le dispositif de refroidissement successif (3), les pipes d'amenée et de sortie (33, 34) pour un véhicule de chaleur (32) sont agencées en décalage les unes à côté des autres par référence à un plan dressé perpendiculairement par rapport aux tubes de refroidissement (21).

21. Ensemble réacteur selon l'une des revendications 1 à 20, **caractérisé en ce que** le dispositif de refroidissement successif (3) est relié de manière détachable avec le réacteur tubulaire à enveloppe (2).

22. Ensemble réacteur selon la revendication 21, **caractérisé en ce que** le dispositif de refroidissement successif (3) est équipé d'un dispositif (67) pour l'abaisser et pour le relever.

23. Ensemble réacteur selon la revendication 21 ou 22, **caractérisé en ce qu'**une unité, qui comprend des pompes (36), des dispositifs de refroidissement (37) et une unité de régulation, est raccordée de façon détachable au dispositif de refroidissement successif (3).

24. Application d'un ensemble réacteur selon l'une des revendications 1 à 23 pour des processus d'oxydation, d'hydruration, de déshydratation, de nitruration, d'alkylation, et similaires.

25. Application d'un ensemble réacteur selon l'une des revendications 1 à 23 pour la fabrication de cétones, méthyle-isobutyl-cétone, mercaptan, isoprène, anthraquinone, ortho-crésol, hexane d'éthylène, furfural, acétylène, acétate de vinyle, chlorure d'isopropyle, anhydride d'acide naphtalique, chlorure de vinyle, oxo-alcool, pyrotol, styrène, nitrure d'acide méthanoïque, oxyde de polyphényle, diméthylphénol, aldéhyde de pyridine, therban, alphaoléfines, vitamine B6, acide cyanhydrique, aniline, nitrate d'acide méthanoïque, difluorométhane, 4-méthyl-2-pentanone, tétrahydrofurane, et pour
oxydation de diméthyle benzols (m, o, p) pour donner les mono- et dialdéhydes correspondants,
oxydation de diméthyle benzols (m, o, p) pour donner les acides mono-et bicarbonés
correspondants, ou respectivement leurs anhydrides,
oxydation de triméthyl benzols pour donner les mono-, di-, et trialdéhydes correspondants,
oxydation de triméthyl benzols pour donner des acides mono-, bi- et tricarbonés correspondants, ou respectivement leurs anhydrides,
oxydation de durène pour donner de l'anhydride d'acide pyromellitique,
oxydation de picoline gamma ou bêta pour donner du carbaldéhyde de picoline gamma ou bêta,
oxydation de picoline gamma ou bêta pour donner de l'acide isonicotinique ou de l'acide nicotinique,
oxydation de propène en acroléine
oxydation d'acroléine en acide acrylique
oxydation de propane en acroléine,
oxydation de propane en acide acrylique
oxydation de butane pour donner de l'anhydride d'acide maléique (MSA),
oxydation de raffinat pour donner MSA,
oxydation de i-butane en méthacroléine
oxydation de méthacroléine en acide méthacrylique
oxydation de méthacroléine en méthacrylate de méthyle,
oxydation de i-butane en méthacroléine,
oxydation de i-butane en acide méthacrylique,
ammonoxydation de diméthyle benzènes (m, o, p) pour donner les mono- et dinitrures correspondants,
ammonoxydation de triméthyl benzènes pour donner les mono-, di-, et trinitrures correspondants, ammonoxydation de propane en acrylonitrile,
ammonoxydation de propène en acrylonitrile,
ammonoxydation de picoline bêta en 3-cyanopyridine,
ammonoxydation de picoline gamma en 4-cyanopyridine,
oxydation de méthanol en formaldéhyde,
oxydation de naphtaline et/ou de ortho-xylène, éventuellement en fonctionnement mixte, en anhydride d'acide phtalique,
oxydation d'éthane en acide acétique,
oxydation d'éthanol en acide acétique,
oxydation de géraniol en citral,
oxydation d'éthène en oxyde d'éthylène,
oxydation de propène en oxyde de propylène,
oxydation d'acide chlorhydrique en chlore,
oxydation de glycol en glyoxal, et
hydruration de MSA en butanediol.
